(19) Europäisches Patentamt / European Patent Office / Office européen des brevets

(11) **EP 2 385 251 B1**

(12) **EUROPEAN PATENT SPECIFICATION**

(45) Date of publication and mention
of the grant of the patent:
**01.03.2017   Bulletin 2017/09**

(51) Int Cl.:
**F03G 7/00** *(2006.01)*      *G02B 26/08* *(2006.01)*

(21) Application number: **11171980.3**

(22) Date of filing: **19.03.2004**

(54) **Method And Apparatus For Converting Or Otherwise Utilizing Radiation Pressure To Generate Mechanical Work**

Verfahren und Vorrichtung zur Umwandlung oder anderweitigen Verwendung von Strahlungsdruck zur Erzeugung von mechanischer Arbeit

Procédé et appareil pour convertir ou autrement utiliser une pression de radiation pour générer un travail mécanique

(84) Designated Contracting States:
**AT BE BG CH CY CZ DE DK EE ES FI FR GB GR HU IE IT LI LU MC NL PL PT RO SE SI SK TR**

(30) Priority:  **19.03.2003   US 393114**

(43) Date of publication of application:
**09.11.2011   Bulletin 2011/45**

(62) Document number(s) of the earlier application(s) in accordance with Art. 76 EPC:
**04757905.7 / 1 611 465**

(73) Proprietor: **Spacedesign Corporation**
**Houston, TX 77251-1045 (US)**

(72) Inventor: **Clay, Joseph, M.**
**Houston, TX 77019 (US)**

(74) Representative: **Merryweather, Colin Henry**
**J A Kemp**
**14 South Square**
**Gray's Inn**
**London WC1R 5JJ (GB)**

(56) References cited:
**GB-A- 2 352 320      US-A- 3 649 105**
**US-A- 5 455 709**

**Description**

The present invention relates generally to a method and apparatus for harnessing the energy present in an electromagnetic light wave and converting this energy to a form of work, for example, mechanical work.

US-3,649,105 discloses an optical shutter. A wedge of transparent material having first and second angularly displaced faces is positioned in a controllable manner with respect to a right angle prism with one of the faces of the wedge parallel to the hypotenuse face of the prism. A piezoelectric element is positioned to drive the wedge relative to the prism between a first position wherein the wedge and prism are in near optical contact and a second position wherein the wedge and prism are spaced by a distance of about one wavelength of the light incident upon the prism so as to switch the optical path of the incident light beam from a condition of transmission to a condition of transmission to a condition of reflection at the hypotenuse face.

According to a first aspect of the present invention, there is provided a method of operating a photon engine to produce linear momentum, the method comprising:

positioning a primary back face of a primary prism comprising a first transparent optical medium having a first index of refraction adjacent to and spaced apart from a secondary back face of a secondary prism comprising a second transparent optical medium having a second index of refraction, the secondary prism comprising multiple lateral faces;

providing a containment chamber comprising the secondary prism and reflective surfaces;

producing a processed light beam by directing a light beam into a light expander/contractor device communicating with the primary prism, the light expander/contractor device comprising facets for reflecting the light by 90 degrees two times to expand the diameter of the light which is rotating in the primary prism in one direction and reflecting the light by 90 degrees two times to contract the diameter of the light which is rotating in the primary prism in the direction opposite to the one direction and a mirror for reversing the direction of the expanded light when the diameter of the expanded light is expanded to the maximum diameter from the one direction to the opposite direction;

compressing the secondary back face of the secondary prism relative to the primary back face of the primary prism, forming a transparent interface therebetween;

communicating the processed light beam through the transparent interface from the primary prism into the secondary prism, splitting the processed light beam multiple times into multiple processed light beams comprising a higher power output than the light beam;

decompressing the secondary back face of the secondary prism relative to the primary back face of the primary prism after communicating the multiple processed light beams into the containment chamber, thereby minimizing communication of the multiple processed light beams from the containment chamber;

repeatedly propagating the multiple processed light beams in the containment chamber along a predetermined reflective light path extending from the secondary back face at a first predetermined angle, through the multiple lateral faces at a generally normal angle to the reflective surfaces, and repeatedly back to the secondary back face at a second predetermined angle effective to reflect the multiple processed light beams from the secondary back face at the first predetermined angle;

the multiple processed light beams thereby repeatedly imparting linear momentum to the reflective surfaces communicating with an energy system.

According to a second aspect of the present invention, there is provided a photon engine comprising one or more cylinders comprising:

a primary prism comprising polished crystalline quartz having a first index of refraction, the primary prism comprising a light beam inlets and a primary back face;

a light expander/contractor device communicating with the light beam inlet, the light expander/contractor device being adapted to expand, reflect, and contract a light beam and to redirect the light beam upon itself, thereby producing a processed light beam;

a secondary prism comprising polished crystalline quartz having a second index of refraction that is substantially the same as the first index of refraction, the secondary prism comprising multiple lateral faces and having a secondary back face positioned adjacent to and spaced apart from the primary back face, forming a non-transparent interface therebetween;

a piezoelectric actuator operatively coupled with the primary prism and/or the secondary prism and adapted to compress the secondary back face relative to the primary back face to form a transparent interface therebetween adapted to transmit the processed light beam from the primary prism to the secondary prism and to split the processed light beam multiple times, producing multiple processed light beams comprising a higher power output than the light beam; and,

a containment chamber comprising the secondary prism and reflective surfaces, the containment chamber being adapted to contain propagation of the multiple processed light beams along a predetermined reflective light path extending from the secondary back face at a first predetermined angle, through the multiple lateral faces at a generally normal angle to the reflective surfaces, and repeatedly back to the secondary back face at a second predetermined angle adapted to reflect the multiple processed light beams from the secondary back face at the first predetermined angle;

wherein the reflective surfaces communicate with an energy system.

These and other features and advantages of the present invention will be apparent to those skilled in the art from the following Detailed Description of preferred embodiments, and the drawings in which:

FIG. 1 is simplified schematic of an apparatus, such as a photon engine, for utilizing radiation pressure associated with light waves to generate mechanical work, according to the present invention;

FIG. 1a is a detail illustration of a compression boundary interface in the close mode, according to the invention;

FIG. 1b is a detail illustration of the compression boundary interface in the open mode, according to the invention;

FIG. 2 is a simplified schematic of one embodiment of a piston assembly suitable for use with the inventive apparatus;

FIG. 3 is a simplified schematic of an alternative embodiment of a photon engine according to the present invention;

FIGS. 4a and 4b are illustrations of prisms that may be used in conjunction with a photon engine according to the present invention;

FIG 5 is a simplified schematic of yet another embodiment of the inventive apparatus; and

FIG. 6a is a simplified plan view schematic illustrating an alternative apparatus and a method of operating the apparatus, according to the invention;

FIG. 6b is a side elevation view of the apparatus in FIG. 6a;

FIG. 7a is a simplified schematic illustrating an alternative primary prism and secondary prism of a photo engine, according to the present invention; and

FIG. 7b is a detailed cross-section of a light expander/contractor as shown in FIG. 7a, according to the invention;

FIG. 7c is a plan view of the light expander/contractor of FIG. 7a, according to the invention;

FIG. 7d is a schematic view illustrating operation of the light expander/contractor, according to the invention;

FIG. 7e is a simplified illustration of operation of the light expander of the primary prism, according to the invention;

FIG. 7f is a simplified illustration of operation of the light contractor of the primary prism, according to the invention;

FIG. 7g is a simplified illustration of operation of the primary and secondary prisms, according to the invention; and

FIG. 7h is a plan view of a light beam pattern resulting from operation of the light expander/contractor, according to the invention.

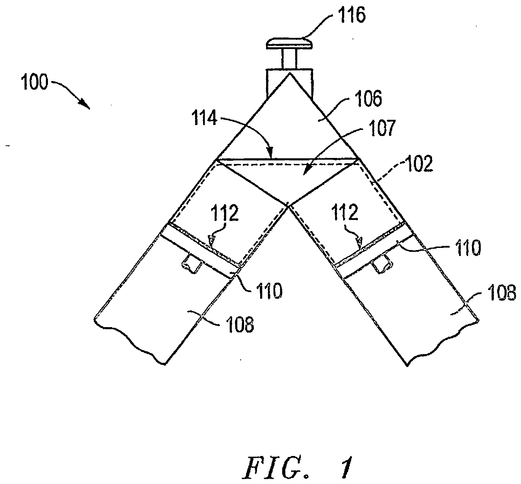

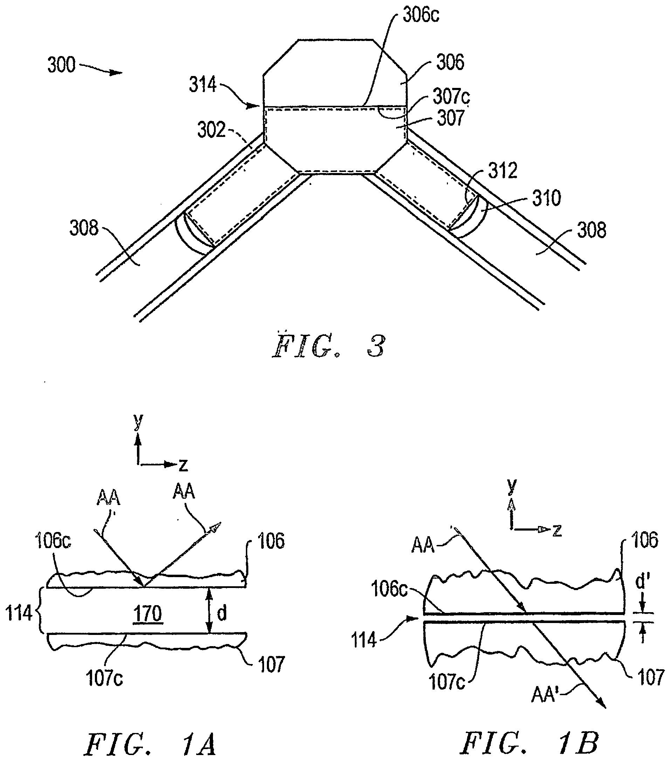

FIGS. 1-7 are provided to illustrate an apparatus and/or method according to the present invention. Various aspects of the invention are embodied in these Figures.

The present invention relates generally to the utilization of radiation pressure inherent or obtainable from a light wave to produce work, for example, mechanical work. The source of this radiation pressure is provided by a light source, or more specifically, propagating electromagnetic waves directed from a light source into or within the apparatus of the invention. The present invention also relates generally to methods and apparatus for communicating or otherwise manipulating such light waves. Operation of a photon engine of the invention entail employment of this aspect of the invention. Generally, the electromagnetic waves are directed into a containment chamber through at least one operable prism that functions in a switching mode. In a preferred embodiment, a primary prism and a secondary prism are used, and are operated together to provide a light switch injection valve, which either reflects light entering the first prism or passes light into the containment chamber.

Operation of the light switch (discussed below in respect to FIGS. 1-7) is based on an optical phenomenon wherein two individual media (*i.e.*, prisms) may be compressed along an interface so that the media combined act as one. First, light is introduced into the primary prism at a predetermined angle. With the light switch in the closed or non-operative mode, the light reflects off a back face or wall of the primary prism. To open the switch and place it in the operative mode, the primary and secondary prisms, *i.e.*, the first and second individual media, are compressed against each other (or more particularly, the secondary prism compresses against or toward the primary prism) through operation of an external driving device. In doing so, the boundary between the two prisms, i.e., the common face, is removed, and the two media function as one. Typically, this boundary may be formed or provided by an air gap or vacuum (in the closed mode) having an index of refraction different from the prism material. Light directed into a first prism, therefore, passes through the boundary with the second prism, through the second prism and enters a containment chamber. It is further advantageous to direct light into the primary prism at a predetermined angle so that the light enters and then propagates within the containment chamber at an angle that is normal to a reflective mirror movably mounted within the chamber.

With light contained in the containment chamber, the light switch is closed. Thus, the light wave or light in the containment chamber maintains columniation and continuously propagates therein. More precisely, the contained light reflects off a first reflective mirror at a normal angle, then against a face of the secondary prism at a nearly 45° angle or other predetermined angle, and then reflects off a second mirror also at a normal angle. These three reflections make up one full cycle which is repeated within a known, predetermined time frame. The time frame also preferably corresponds to 1/2 of the operating frequency of the light switch: between opened and closed modes. During each cycle, the light cycles between the three reflective surfaces at a high rate so that radiation pressure is transmitted to or through the two mirror surfaces thereby converting or translating the energy of the light wave to mechanical work, i.e., movement of the mirror. In preferred embodiments, the mirror is operatively connected to a piston and contained in a cylinder assembly the cylinder preferably does not absorb the light) so as to operate as an engine.

To facilitate description of the invention, a brief explanation of certain concepts is first provided.

The light wave which is the object of the inventive method is an electromagnetic wave. Electromagnetic waves transport linear momentum making it possible to exert a mechanical pressure on a surface by shining a light on it the surface. It should be understood that this pressure is small for individual light photons. But given a sufficient number of photons a significant mechanical pressure may be obtained.

Maxwell (J.C.) showed the resulting momentum p for a parallel beam of light that is totally absorbed is the energy U divided by the speed of light c.

$$p = \frac{U}{c}$$

If the light beam is totally reflected the momentum resulting at a normal incidence to the reflection is twice the total absorbed value.

$$p = \frac{2U}{c}$$

These examples represent the two ends of the spectrum for momentum transfer. At one end is the totally inelastic case of the totally absorbed beam at one end that demonstrates the totally inelastic case where the particles stick together and the most kinetic energy is lost, typically, to another form of energy such as thermal energy or deformation. At the other end of the spectrum, a totally reflected beam demonstrates a completely elastic collision where kinetic energy is conserved.

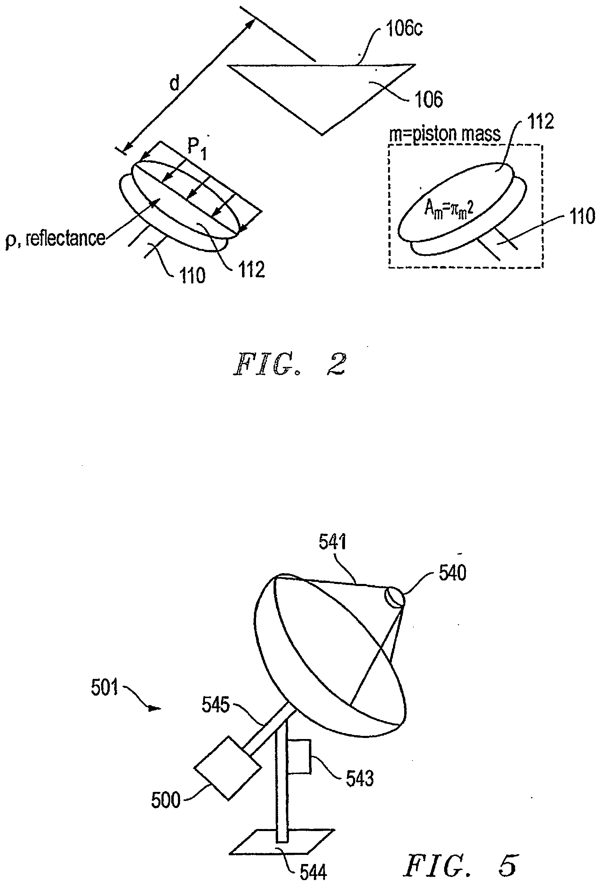

With reference to FIG. 2, the following sections provide calculations on the power produced by an apparatus and method, i.e. an engine, according to the invention. The calculations can be divided into four sections: Force (F); Time (T); Work (W); and Power (P).

The following details the force calculation on a single mirror, with surface area, $A_m$, and an initial radiation pressure entering the containment chamber, $p_1$, until the radiation pressure is effectively zero after z number of bounces.

$$F_{0-z} = p_1 A_m + p_2 A_m + p_3 A_m + \ldots + p_z A_m$$

The relationship between each radiation pressure bounce can be represented as a function of surface reflectance, p.

$$p_2 = \rho\, p_1, \quad p_3 = \rho\, p_2, \quad p_4 = \rho\, p_3, \quad \ldots, \quad p_z = \rho\, p_{z-1}$$

Inserting the radiation pressure relationship between bounces off all surfaces results in the following relationship:

$$F_{0-z,total} = p_1 A_m + \varepsilon\, p_1 A_m + \varepsilon^2\, p_1 A_m + \ldots + \varepsilon^z\, p_1 A_m$$

or

$$F_{0-z,total} = \sum_{n=0}^{z} \varepsilon^n\, p_1 A_m$$

For a single mirror every fourth bounce should be added to the force calculation:

$$F_{0-z,single\ mirror} = p_1 A_m + \rho^4\, p_1 A_m + \rho^8\, p_1 A_m + \ldots + \rho^{4z/4}\, p_1 A_m$$

or

$$F_{0-z,single\ mirror} = \sum_{n=0}^{z/4} \rho^{4n}\, p_1 A_m$$

The time or duration of the force is found by dividing the distance the light travels by the velocity of light.

$$t = \frac{zd}{c}$$

The work of a resultant force on a body equals the change in its kinetic energy. The work calculation for a single piston head is as follows.

$$W = \frac{1}{2} m\left(v_2^2 - v_1^2\right) \xrightarrow{v_1=0} W = \frac{1}{2} m v_2^2$$

The relationship between velocity, acceleration and force are as follows.

$$v = at$$

$$F = ma \quad \Rightarrow \quad a = \frac{F}{m}$$

Therefore,

$$v = \frac{F}{m}t$$

To obtain the work on a single mirror the force, time and velocity equation are substituted into the work equation.

$$W_{\text{single mirror}} = \frac{1}{2} \frac{\left( \sum_{n=0}^{z/4} \rho^{4n} \, p_1 A_m \right)^2 \left( \frac{zd}{c} \right)^2}{m}$$

For a reflectance that is nearly equal to one the force exerted on the second mirror is approximately equal to the force on the first mirror. Hence, the sum for work in a single containment chamber is as follows.

$$W_{\text{containment chamber}} \approx 2W_{\text{single mirror}} = \frac{\left( \sum_{n=0}^{z/4} \rho^{4n} \, p_1 A_m \right)^2 \left( \frac{zd}{c} \right)^2}{m}$$

Power is the time rate of doing work. If a single chamber operated continuously, the power would have to account for a full operation or cycle of the cylinder that consists of compression and expansion phases where the force is applied during half the compression phase and removed during the expansion phase.

$$P_{\text{containment chamber}} = \frac{1}{4} \frac{W_{\text{containment chamber}}}{t}$$

or

$$P_{\text{containment chamber}} = \frac{\left( \sum_{n=0}^{z/4} \rho^{4n} \, p_1 A_m \right)^2 \left( \frac{zd}{c} \right)}{4m}$$

For a photon engine with 4 containment chambers the power would be as follows.

$$P_{\text{photon engine}} = 4P_{\text{containment chamber}} = \frac{\left( \sum_{n=0}^{z/4} \rho^{4n} \, p_1 A_m \right)^2 \left( \frac{zd}{c} \right)}{m}$$

Now turning to FIGS. 1- 7, these Figures illustrate several embodiments of an apparatus according to the invention. Specifically, each of Figs. 1, 3, 5, and 7 depict an exemplary photon engine according to the invention and various devices for use therewith, also according to the invention. These Figures also depict devices for communicating or otherwise manipulating light waves, according to the invention. One of these inventive devices is a compression boundary light switch. Another of these devices is a primary prism capable of multiplying or splitting a light wave introduced therein (*i.e.*, prior to introduction into the containment chamber) to increase its intensity..

FIG. 1 is a simplified schematic of a system and/or apparatus 100 that manipulates or otherwise communicates light or light waves and/or utilizes radiation pressure to generate mechanical work, each according to the invention. In particular, the apparatus 100 is a photon engine 100 that utilizes radiation provided by a light wave introduced into or manipulated by the apparatus. The inventive photon engine 100 preferably includes a primary prism 106 for receiving the light wave, a secondary prism 107 operatively and collectively associated with the primary prism 106, and a containment chamber 102 (as shown in dash lines in FIG. 1). The primary prism 106 and the secondary prism 107 are situated so as to abut face-to-face (or wall-to-wall) and to form a compression boundary interface 114. As discussed briefly above, the interface 114 may actually include, in one mode, a closeable or compressible air or vacuum gap between the two faces, as further discussed in respect to FIGS. 1a and 1b.

The exemplary photon engine 100 further includes substantially identical pairs of piston housings or cylinders 108, piston assembly 110, and reflective mirrors 112. The containment chamber 102 is defined by the front face of the secondary prism 107, the cylinders 108, and the mirrors 112. The highly reflective mirrors 112 are mounted on a planar surface of the moveable piston 110. The mirrors 112 and piston assemblies 110 travel together within the cylinders 108. As will also be described below, the piston assembly 110 may be mechanically connected with a crank shaft assembly and the like.

As is apparent from FIG. 1, movement of the reflective mirrors 112 and piston assembly 110 allows for the volume of the containment chamber 102 to increase or decrease, at least on either side of the secondary prism 107. Preferably, the mirrors 112 will move in unison (as part of a larger piston/crank shaft assembly). Moreover, the compression boundary between the primary prism 106 and secondary prism 107 operates as a light switch 114, also according to the invention. As discussed above, the light switch 114 may be operated by way of a piezoelectric drive mechanism 116 that drives the closing of the air gap (through compression) to allow light to pass into the containment chamber 102. Operation of the drive mechanism 116 determines, therefore, the open and close modes of the light switch 114, in a controlled manner.

The photon engine 100 preferably utilizes quartz material for the primary prism 106 and the secondary prism 107. More specifically, the photon engine 100 provides a compression boundary light switch that operates on two fundamental principals or properties of quartz: the piezoelectric effect and total internal reflection (TIR). The piezoelectric effect occurs when quartz is placed in an electric field. Specifically, quartz expands in the presence of an electric field. The crystalline structure of quartz has three primary axis: X, Y, and Z. By placing an electric field oriented along its X-axis, the quartz will expand or contract based on the direction of the electric field. If the electric field results in a compression along the X-axis, then the quartz will expand along or in the Y-axis. By constraining the quartz along the Y-axis during expansion, stress is generated in the quartz along the Y-axis. This generation of stress and the resulting strain in the Y-axis by an electric field oriented along the X-axis is utilized to compress the two pieces of quartz (*i.e.*, primary prism 106 and secondary prism 107.

FIG. 1a depicts a detailed schematic of the compression boundary interface 114 while in the closed or non-operative mode. In this mode, the back face 106c of the primary prism 106 is spaced from the front face 107c of the secondary prism 107. Given Snell's Law and the incident angle, the index of refraction of both prisms are sufficiently similar (e.g., preferably within bout 5% to about 20% of each other) to facilitate operation of the light switch in the open mode. Also, the index of refraction for both prisms are sufficiently dissimilar from the void (or air space) to facilitate operation of the light switch in the closed mode. As a result, an air gap 170 is provided between the two faces 106c, 107c. In the present description, the compression boundary or interface 114 is used to refer to the air gap 170 and the faces 106c, 107c. FIG. 1A also shows the coordinates or axes X, Y of the quartz or primary prism 106. Typically, the air gap 170 will have a depth of about 2000 nanometers to 50 nanometers, and more preferably, between about 1000 nanometers to 100 nanometers, in the closed or non-operative mode.

FIG. 1b illustrates the compression of the compression boundary 114 upon operation of the piezoelectric drive mechanism 116. The result is that the air gap 170 is compressed to about 100 nanometers to 0 nanometer, upon application or excitation of the electric field. As discussed above, application of the electric field results in contraction along in the X-axis direction, which generates stress in the Y direction (as a result of the quartz material or face 106c being prevented from expanding in the Y direction). Preferably, application of the drive mechanism 116 will be applied to both the primary prism 106 and secondary prism 107, or more specifically, the faces 106c and 107. Preferably, the air gap 170 will be compressed to a depth of about 100 nanometers to about 0 nanometer, and more preferably to a depth of about 50 nanometers to about 0 nanometer.

FIGS. 1a and 1b are also used to indicate the communication of the light wave AA through the primary prism 106 and/or compression boundary 170, according to the invention. In FIG. 1a, the light wave AA impacts the back face 106c at an incident angle of about 45°. Due to the index of refraction provided also by the air gap 170, the light wave AA reflects due to TIR in a direction that is generally 90° to its incident angle. In FIG. 1b, because the air gap 170 is substantially eliminated, and the quartz material of the secondary prism 107 is substantially similar to that of the primary prism 106, the two faces 106c, 107c, function as one single medium. That is, the effect of a different index of refraction (provided by the air gap 170) is eliminated. Accordingly, the light wave AA passes through the face 106c and through the face 107c of the secondary prism 107 without interruption.

Snell's Law describes the effect when radiation, or electric magnetic waves, pass from one media to the other. The resulting angle is a function of the incident angle in the index of refraction for both media. If the result of Snell's Law is an imaginary number, the electromagnetic wave is TIR. The photon engine 100 according to the invention utilizes this phenomenon to contain light waves within the primary prism (as is described in respect to a further embodiment).

By coupling TIR and removal of the TIR boundary through piezoelectric compression, a light switch according to the invention is produced. In the off-mode, with no voltage applied, the light is TIR and remains outside the containment chamber 112. When the voltage is applied, the light switch is said to be in the on-mode and the TIR boundary is removed. This allows the light wave to pass through the compression boundary or interface CC, and into the containment chamber 112. Accordingly, an important step of the inventive method, the light switch is actuated on and than off quickly, so as to capture or contain light.

Preferably, the drive mechanism 116 includes a source of high voltage, low current (near electrostatic) that sends the signal to the piezoelectric quartz or prism 106, 107. Mechanical connections is provided by copper plates, for example, attached to the appropriate faces of the primary and secondary prisms 106, 107. The drive mechanism further includes a field effect transistor for providing switching at a very quick (gigahertz) pulse. Most preferably, the pulse is open for a nanosecond and then off for a millisecond.

FIG. 2 is a schematic of one embodiment of the moveable assembly comprising piston 210 and mirror 212. The assembly is characterized by a mass m (and a particular area) and reflectivity E. In operation, the mirror surface is irradiated by a light flux $p_1$ over a distance d by radiation transmitted through a compression boundary 214 and into secondary prism 207. The radiation pressure p collectively generates a mechanical force that acts on the mirror 212 and piston assembly 210.

Now turning to FIG. 3, there is illustrated an alternative embodiment of a photon engine 300 according to the invention. In the depicted variation, wherein like reference numerals are used to refer to like elements, a primary prism 306 is situated adjacent a secondary prism 307. In particular, a back face 306c of primary prism 306 is spaced from a front face 307c of secondary prism 307, to form a compression boundary interface 314 between the primary prism 306 and the containment chamber 302. The boundary interface 314 provides for an octagonal cross section switch element in this embodiment. In all other aspects of the design and operation, the photon engine 300 is substantially similar to that depicted in FIG. 1. As with the photon engine 100 of FIG. 1, the photon engine 300 includes a pair of cylinders 308, a piston 310 moveably accommodated therein, and a highly reflective mirror 312 mounted on the piston 310.

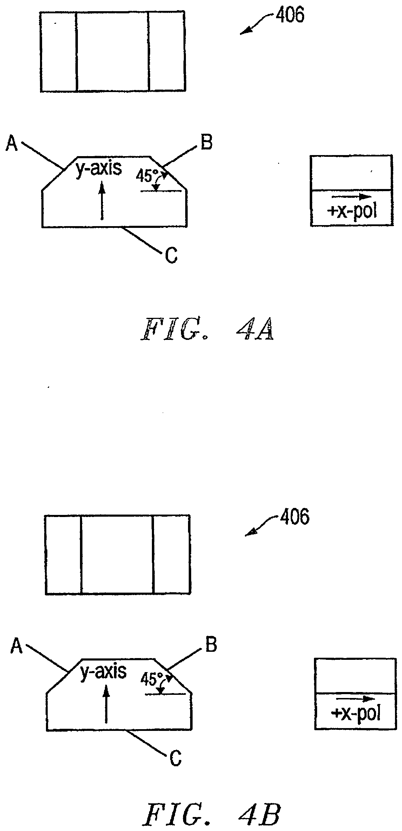

FIGS. 4a and 4b illustrate prisms 406 of various geometric configurations suitable for use as a primary prism in the present invention. The prisms 406 are preferably made of crystalline quartz material with an index of refraction that is greater than 1.45. In practice, it is important to provide for highly polished surfaces through or from which light waves will refract, pass, or reflect. In the prisms 406 of FIG. 4, faces A, B, and C are polished for this purpose.

FIG. 5 depicts a simplified schematic of a system 501 for converting radiant energy into a different form of energy or work, according to the invention. The system 501 utilizes a photon engine 500 as described previously. Furthermore, the system 501 utilizes a primary collective mirror 541 having an inner parabolic surface that may be covered or coated with a 3M™ radiant light film. The system 501 may further include or utilize at least a secondary collector mirror 540 mounted above the primary collector 541 and positioned to reflect light waves reflecting from the inner parabolic surface of the primary collector 541. The secondary collector 540 is characterized by a smaller surface, but may advantageously be covered or coated with 3M™ radiant light film on an outer surface. The system may be further equipped with a light guide 545 for communicating concentrated light from the secondary collector mirror 540 and the primary collector mirror 541 to the photon engine 500. Preferably, the system 501 will include a stand and base assembly 544, and a pointing controller 543 for directing the system 501 towards a radiation source.

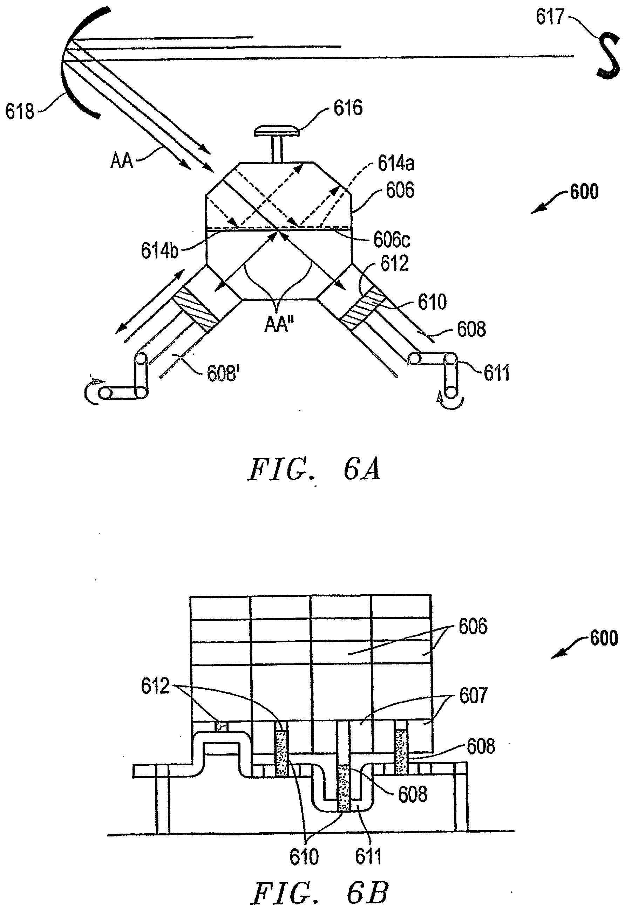

FIGS. 6a and 6b are simplified schematics further illustrating a variation of the inventive photon engine, in particular, a multi-cylinder photon engine 600. These two figures are also illustrative of the operation of the inventive engine 600. FIG. 6a provides a front view of the engine 600, including two cylinders 608, 608' which reciprocate in unison. In the side elevation view of FIG. 6b, the four cylinders 608 on one side of the photon engine 600 are shown. The cylinders 608 accommodate travel of a piston assembly 610 that is operatively connected to crank shaft assembly 611.

Turning to FIG. 6a, the photon engine 600 includes an octagonal shape primary prism 606 positioned adjacent a similarly shaped secondary prism 607, via compression boundary interface 614 formed at least partially by back and front faces 606c, 607c, respectively. The secondary prism 607 communicates with each of cylinders 608, 608' and thus the mirror 612 and piston 610 in each of the cylinders 608, 608'. In the side elevation view of FIG. 6b, four primary prisms 606 and four secondary prisms 607 are shown, each pair being operatively associated with a pair or a bank of cylinders 608 and the piston 610 and crank assemblies 611 situated therein.

Turning to FIG. 6a, the compression boundary interface 614 is operatively driven by a prism piezoelectric drive mechanism 616 to operate the opening or closing of compression boundary light switch (CBLS), as described previously. In FIG. 6a, the interface denoted by 614a is used to show the light switch in the closed position (in dash lines) while reference numeral 614b is used to denote the light switch in the open position. FIG. 6a further illustrates the source of light waves 617 provided externally of the photon engine 600. The light waves 617 are first captured or concentrated via collector mirror 618 and redirected as instant radiation into the primary prism 606 (see arrows AA). The light waves AA impact the back face 606c at an incident angle of about 45°. If the light switch is in the closed position (denoted by dash line and ref. no. 614a), the light waves AA reflect off the interface 614a (see dash lines) and are redirected through another face of the prism 606 (and exits the primary prism 606).

When the interface 614 is in the open position (denoted by solid line and ref. no. 614b), the light waves AA travels through the interface 614b and enter the containment chamber 602 and impact the back face 606, as shown by arrows AA'. Further, the prisms 606 and 608 are configured such that the light waves AA' enter the containment chamber 608 and are directed straight into the cylinder 608. Thus, the light wave AA' contacts the mirror surface 612 at a preferably generally normal angle and as a result, a relatively high degree of reflectance is achieved. As illustrated, a reflected light wave reflects generally straight back towards the open interface 614b, which is now in a closed position, and impacts the interface at about a 45° angle. Accordingly, the reflected light wave AA' reflects off the closed interface 614b in a direction of the second cylinder 608 of the containment chamber 602. As previously described, the reflected light wave AA' also impacts the second mirror 612 at a generally normal orientation and reflects back at a normal orientation (and at a high degree of reflectance). Accordingly, the light wave AA' reflects along the same path from which it traveled to reach the second mirror 612. In one respect, a predetermined light path is defined by the orientations of the prisms 606, 607, the cylinder 608, 608', among other components. Such a predetermined light path is represented by the bi-directional arrows AA' in FIG. 6.

As also described previously, contact of the light wave AA' on the surface of the mirror 612 generates radiation pressure thereon. This radiation pressure acts to displace the mirror 612 and piston 610 assembly a distance which is denoted by "X" in FIG. 6 (thereby generating work). Moreover, this displacement causes crank shaft assembly 611 to turn thereby generating mechanical energy. In another mode, the drive mechanism 614 may be operated in a frequency modulated mode so that the opening and closing of the light switch allows light to enter the secondary prism 607 on a time scale that is related to the frequency of the radiation inside the secondary prism 607. In this way, the radiation pressure on piston 612 assemblies is reinforced.

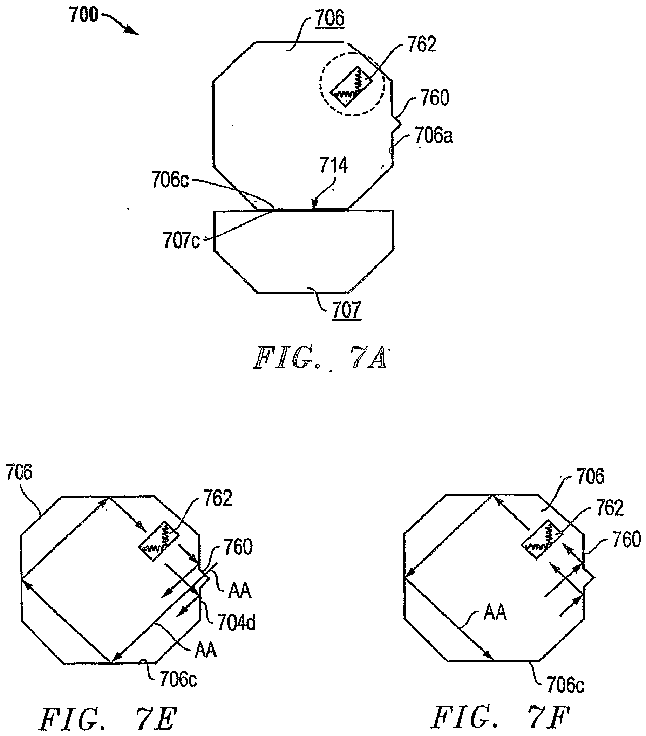

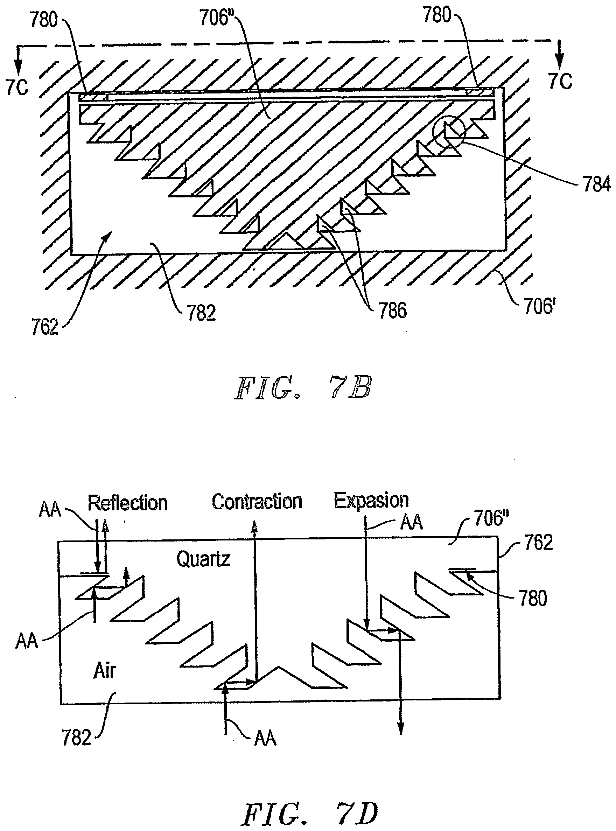

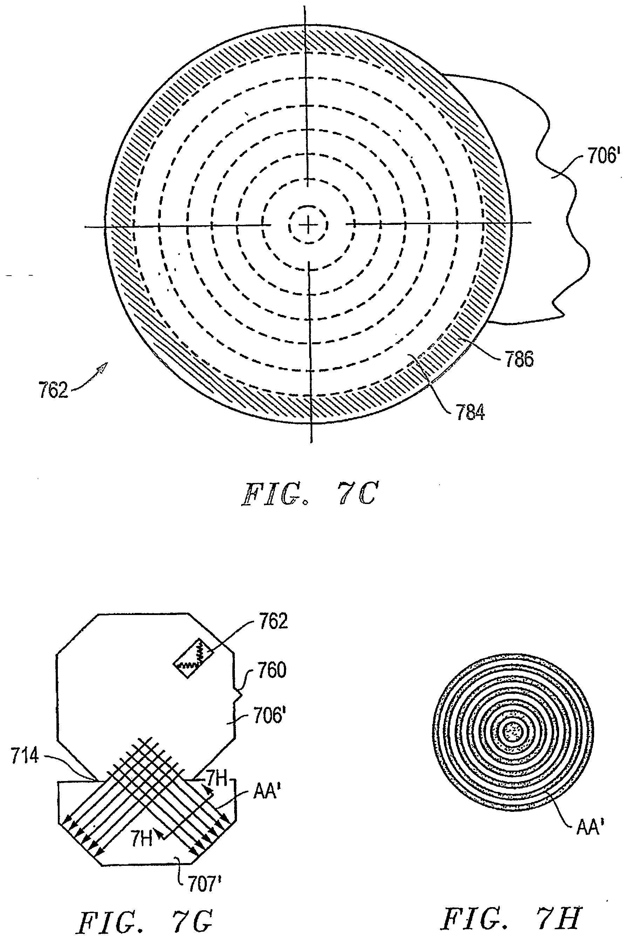

The simplified schematics of FIG. 7 illustrates yet another alternative embodiment of the photon engine according to the invention, wherein like reference numerals are used to indicate like elements. In particular, FIG. 7a depicts an arrangement of a primary prism 706 and a secondary prism 707 that utilizes a light beam expander/contractor 762 embedded in the primary prism 706. Specifically, the light beam expander/contractor 762 functions to split the light beam multiple times and redirect it upon itself, thereby increasing the intensity of the light wave ultimately introduced into the containment chamber.

In the embodiment of FIG. 7, the primary prism 706 has an octagonal shape, and thus, has eight faces or walls 706a - 706h (only some of which are shown). As in previous embodiments, the primary prism 706 is preferably made of a quartz material. The primary prism 706 includes a protrusion 760 extending from the first face 706a, that serves as a beam inlet 760. The beam inlet 760 preferably has a concentrated, circular shape. Further, another face 706c of the primary prism 706 is positioned adjacent to and spaced apart from a front face 707c of the secondary prism 707 to form a compression boundary interface 714. As discussed above, the interface 714 provides for a compression boundary light switch upon operation by the proper drive mechanism, in accordance with the present invention.

Referring to the detailed view of FIG. 7b, in yet another aspect of the invention, the primary prism 706 is equipped with a light beam expander/ contractor 762 positioned internally of the primary prism 706 and embedded in the quartz material 706'. FIGS. 7c and 7d provide further detail illustrations of the expander/contractor 762.

Returning to FIG. 7d, the light expander/contractor 762 is a faceted quartz block embedded in the quartz material 706'. Physically, the light expander/contractor 762 is a carved, circular section of quartz material 706' having concentric air interfaces 786 cut therein. The faceted quartz block 762 is centered on an incoming light beam AA having a given diameter. As shown in FIG. 7b, the quartz block 762 (*i.e.*, the light expander/contractor 762) provides a set of concentric 45° facets of quartz-air interfaces. The cross hatch section illustrates the quartz material 706' of the primary prism 706 as well as the quartz material 706" of the quartz block 762. The remaining non-cross hatch areas are air or vacuum interfaces 782, which are void of the quartz material. More importantly, these air interfaces 782 have optic properties (*i.e.*, index of refraction) different from that of the quartz material. FIG. 7b and the plan view of FIG. 7c, also depict a concentric mirror 780 providing the outer cylinder of the concentric interfaces. As will be explained below, the mirror 780 functions to reflect the outer most diameter concentric cylinder of light during operation, thereby reversing the light path and beginning the process of light contraction.

The schematic of FIG. 7d is provided an illustration of how the inventive light expander/contractor 762 communicates or otherwise manipulates a light beam AA traveling through the primary prism 706. In a first mode of communication, the light beam $AA_E$ reflects upon the 45° quartz-air interface 784. Each incident beam experiences two 90° reflections in the outward direction, thereby converting the diameter of the beam to a larger (expansion) diameter. In the reverse mode, the light beam $AA_C$ again hits the quartz-air interface 784 and experiences again two 90° reflections that converts the diameter to a smaller (contraction) diameter.

The light expander/contractor 762 provides, therefore, three operations: light expansion, light reflection, and light contraction. Light reflection ($AA_L$) occurs once the light beam AA has been expanded to the largest concentric cylinder. This is prompted by reflection off of mirror 780, which reverses the direction of the light $AA_L$. Once the light beam has been completely expanded and contracted, the light switch (compression boundary interface 714) is activated, thereby allowing the containment chamber to be filled in two directions, as shown in FIG. 7g. FIG. 7h illustrates the resulting beam pattern acting on the mirror 710 and piston assembly 712, after the beam flux has been multiplied in the primary prism 706. Once all of the light is injected into the containment chamber 702, the light switch is returned to the closed position so that the resulting beam is contained in the containment chamber. The multiplication of the light beam flux from the primary prism 706 results, therefore, in a higher power output.

FIGS. 7e and 7f illustrate general operation of the primary prism 706, while the compression boundary light switch is in the closed or off mode. Collected light beam AA is introduced into the primary prism 706 at a generally normal angle through beam inlet 760. Preferably, the beam inlet 760 is located such that the light beam AA introduced into the primary prism 706 is directed towards the back face 706c and compression boundary interface 714. Initially, the light switch is in the closed or reflective stage. Thus, the light beam AA reflects at a generally normal angle and toward another face 706e of the primary prism 706. The incident angle of this reflected light beam AA is such that the light beam AA will also reflect off the prism face 706e (and subsequent face 706g) at a generally normal angle. Accordingly, as illustrated in FIG. 7e, the light beam AA initially rotates around the primary prism 706 due to total internal reflection.

Preferably, the collected beam AA enters the primary prism 706 and experiences three light reflections before entering the beam expander/contractor 762. The direction at which the light beam AA enters the expander/contractor 762 determines whether the beam AA is expanded or contracted. In FIG. 7e, the light beam AA is shown rotating within the primary prism 706 in the clockwise direction. In this direction, the light beam entrance into the beam expander/contractor 762 results in the light beam AA being expanded. Conversely, the light beam AA may be directed within the primary prism in a counter clockwise direction. As illustrated in FIG. 7f, the light beam AA enters the expander/contractor 762 such that the resulting light beam will be contracted. With each rotation and introduction into the beam expander/contractor, the resulting light beam AA expands or contracts to the next level of concentric cylinders. Expansion is, however, limited by the reflected mirror 780 at the largest level of concentric cylinders. At this point, the direction of the light beam AA is reversed thereby reinitiating the process of contraction.

It should be understood, however, that various arrangements and deployments of the components of inventive apparatus in accordance with the invention may be made and will vary according to the particular environment and applications. However, in any such applications, various aspects of the inventions will be applicable, as described above. For example, various aspects of the photon engine, such as the containment chamber design, the optical switching devices, and the light multiplier or light wave intensifier may be incorporated with other engine or mechanical work devices. As a further example, the piston and cylinder assembly may be replaced by another energy system such a energy storage device (e.g., a spring device).

The foregoing description of the present invention has been presented for purposes of illustration and description. It is to be noted that the description is not intended to limit invention to the apparatus, and method disclosed herein. Various aspects of the invention as described above may be applicable to other types of engines and mechanical work devices and methods for harnessing radiation pressure to generate mechanical work. It is to be noted also that the invention is embodied in the method described, the apparatus utilized in the methods, and in the related components and subsystems. These variations of the invention will become apparent to one skilled in the optics, engine art, or other relevant art, provided with the present disclosure. Consequently, variations and modifications commensurate with the above teachings and the skill and knowledge of the relevant art are within the scope of the present invention. The embodiments described and illustrated herein are further intended to explain the best modes for practicing the invention, and to enable others skilled in the art to utilize the invention and other embodiments and with various modifications required by the particular applications or uses of the present invention.

## Claims

1. A method of operating a photon engine (100) to produce linear momentum, the method comprising:

   positioning a primary back face of a primary prism (106) comprising a first transparent optical medium having a first index of refraction adjacent to and spaced apart from a secondary back face of a secondary prism (107) comprising a second transparent optical medium having a second index of refraction, the secondary prism (107) comprising multiple lateral faces;
   providing a containment chamber (102) comprising the secondary prism (107) and reflective surfaces (112);
   producing a processed light beam by directing a light beam into a light expander/contractor device (762) communicating with the primary prism (106), the light expander/contractor device (762) comprising facets for reflecting the light by 90 degrees two times to expand the diameter of the light which is rotating in the primary prism in one direction and reflecting the light by 90 degrees two times to contract the diameter of the light which is rotating in the primary prism in the direction opposite to the one direction and a mirror for reversing the direction of the expanded light when the diameter of the expanded light is expanded to the maximum diameter from the one direction to the opposite direction;
   compressing the secondary back face of the secondary prism (107) relative to the primary back face of the primary prism (106), forming a transparent interface therebetween;

communicating the processed light beam through the transparent interface from the primary prism (106) into the secondary prism (107), splitting the processed light beam multiple times into multiple processed light beams comprising a higher power output than the light beam;

decompressing the secondary back face of the secondary prism (107) relative to the primary back face of the primary prism (106) after communicating the multiple processed light beams into the containment chamber (102), thereby minimizing communication of the multiple processed light beams from the containment chamber (102);

repeatedly propagating the multiple processed light beams in the containment chamber (102) along a predetermined reflective light path extending from the secondary back face at a first predetermined angle, through the multiple lateral faces at a generally normal angle to the reflective surfaces (112), and repeatedly back to the secondary back face at a second predetermined angle effective to reflect the multiple processed light beams from the secondary back face at the first predetermined angle;

the multiple processed light beams thereby repeatedly imparting linear momentum to the reflective surfaces (112) communicating with an energy system.

2. The method of claim 1 further comprising:

collecting and concentrating light using one or more collective mirrors (540, 541) to produce concentrated light;

communicating the concentrated light to the primary prism (106);

directing the concentrated light into the light expander/contractor device (762) communicating with the primary prism (106), producing a processed, concentrated light beam;

communicating the processed, concentrated light beam through the transparent interface from the primary prism (106) into the secondary prism (107), splitting the processed, concentrated light beam multiple times into multiple processed, concentrated light beams comprising a higher power output than the concentrated light;

communicating the multiple processed, concentrated light beams into the containment chamber (102), thereby minimizing communication of the multiple processed, concentrated light beams from the containment chamber (102);

repeatedly propagating the multiple processed, concentrated light beams in the containment chamber (102) along the predetermined reflective light path, the multiple processed, concentrated light beams thereby repeatedly imparting linear momentum to the reflective surfaces (112) communicating with an energy system.

3. The method of claim 1 further comprising:

directing an additional light beam into the light expander/contractor device (762), thereby expanding, reflecting, contracting, and redirecting the additional light beam upon itself, producing an additional processed light beam;

compressing the secondary back face of the secondary prism (107) relative to the primary back face of the primary prism (106), forming the transparent interface therebetween;

communicating the additional processed light beam through the transparent interface from the primary prism (106) into the secondary prism (107), splitting the additional processed light beam multiple times into multiple additional processed light beams comprising a higher power output than the additional light beam;

decompressing the secondary back face of the secondary prism (107) relative to the primary back face of the primary prism (106) after communicating the multiple additional processed light beams into the containment chamber (102), thereby minimizing communication of the multiple additional processed light beams from the containment chamber (102);

repeatedly propagating the multiple additional processed light beams along the predetermined light path, thereby repeatedly imparting additional linear momentum to the reflective surfaces (112) communicating with the energy system.

4. The method of claim 2 further comprising:

directing additional concentrated light into the light expander/contractor device (762), thereby expanding, reflecting, contracting, and redirecting the additional concentrated light upon itself, producing an additional processed, concentrated light beam;

compressing the secondary back face of the secondary prism (107) relative to the primary back face of the primary prism (106), forming the transparent interface therebetween;

communicating the additional processed, concentrated light beam through the transparent interface from the primary prism (106) into the secondary prism (107), splitting the additional processed, concentrated light beam multiple times into multiple additional processed, concentrated light beams comprising a higher power output than the additional light beam;

decompressing the secondary back face of the secondary prism (107) relative to the primary back face of the primary prism (106) after communicating the multiple additional processed, concentrated light beams into the containment chamber (102), thereby minimizing communication of the multiple additional processed, concentrated light beams from the containment chamber (102);

repeatedly propagating the multiple additional processed, concentrated light beams along the predetermined light path, thereby repeatedly imparting additional linear momentum to the reflective surfaces (112) communicating with the energy system.

5. The method of any one of claims 1 to 4 wherein the energy system produces mechanical work.

6. The method of any one of claims 1 to 5 wherein the energy system is a crank shaft assembly (611) and the linear momentum imparted to the multiple reflective surfaces causes the crank shaft assembly (611) to reciprocate.

7. The method of any one of claims 1 to 4 wherein the energy system is a spring device.

8. The method of any one of claims 1 to 7 further comprising performing the method substantially simultaneously in multiple cylinders (608) comprising multiple containment chambers.

9. A photon engine comprising one or more cylinders comprising:

a primary prism (106) comprising polished crystalline quartz having a first index of refraction, the primary prism (106) comprising a light beam inlets and a primary back face;

a light expander/contractor device (762) communicating with the light beam inlet, the light expander/contractor device being adapted to expand, reflect, and contract a light beam and to redirect the light beam upon itself, thereby producing a processed light beam;

a secondary prism (107) comprising polished crystalline quartz having a second index of refraction that is substantially the same as the first index of refraction, the secondary prism comprising multiple lateral faces and having a secondary back face positioned adjacent to and spaced apart from the primary back face, forming a non-transparent interface therebetween;

a piezoelectric actuator (616) operatively coupled with the primary prism (106) and/or the secondary prism (107) and adapted to compress the secondary back face relative to the primary back face to form a transparent interface therebetween adapted to transmit the processed light beam from the primary prism (106) to the secondary prism (107) and to split the processed light beam multiple times, producing multiple processed light beams comprising a higher power output than the light beam; and,

a containment chamber (102) comprising the secondary prism (107) and reflective surfaces (112), the containment chamber (102) being adapted to contain propagation of the multiple processed light beams along a predetermined reflective light path extending from the secondary back face at a first predetermined angle, through the multiple lateral faces at a generally normal angle to the reflective surfaces (112), and repeatedly back to the secondary back face at a second predetermined angle adapted to reflect the multiple processed light beams from the secondary back face at the first predetermined angle;

wherein the reflective surfaces (112) communicate with an energy system.

10. The photon engine of claim 9 wherein:

the primary prism (106) communicates with one or more collective mirrors (540, 541) each comprising a reflective surface adapted to collect and concentrate light and to communicate concentrated light to the primary prism (106);

the transparent interface is adapted to transmit the concentrated light from the primary prism (106) to the secondary prism (107) and to split the concentrated light multiple times, producing multiple processed, concentrated light beams comprising a higher power output than the concentrated light; and,

the containment chamber (102) is adapted to contain propagation of the multiple processed, concentrated light beams along the predetermined reflective light path.

11. The photon engine of claims 9 or 10 wherein the energy system is a piston and a crank shaft assembly (611).

12. The photon engine of any one of claims 9 to 11 wherein the energy system is a spring device.

**13.** The photon engine of any one of claims 9 to 12 wherein the first index of refraction is greater than 1.45 and the second index of refraction is greater than 1.45.

**14.** The photon engine of any one of claims 9 to 13 comprising multiple cylinders (608).

## Patentansprüche

**1.** Ein Verfahren zum Betreiben eines Photonenantriebs (100), um einen linearen Impuls zu erzeugen, wobei das Verfahren folgende Schritte umfasst:

- Positionieren einer primären Rückseitenfläche eines primären Prismas (106), welches ein erstes transparentes optisches Medium mit einem ersten Brechungsindex umfasst, angrenzend an und beabstandet von einer sekundären Rückseitenfläche eines sekundären Prismas (107), welches ein zweites transparentes optisches Medium mit einem zweiten Brechungsindex umfasst, wobei das sekundäre Prisma (107) mehrere laterale Flächen umfasst; und
- Bereitstellen einer Einschlusskammer (102), welche das sekundäre Prisma (107) und reflektive Flächen (112) umfasst;
- Erzeugen eines verarbeiteten Lichtstrahls durch ein Lenken eines Lichtstrahls in ein Licht-Expansions/Kontrahier-Gerät (762), welches mit dem primären Prisma (106) in Verbindung steht, wobei das Licht-Expansions/Kontrahier-Gerät (762) Facetten zum Reflektieren des Lichts zweimal um 90 Grad, um den Durchmesser des Lichts, welches in dem primären Prisma in Richtung entgegengesetzt zu der einen Richtung rotiert, zu expandieren, und zum Reflektieren des Lichts zweimal um 90 Grad, um den Durchmesser des Lichts, welches in dem primären Prisma in Richtung entgegengesetzt zu der einen Richtung rotiert, zu kontrahieren, und einen Spiegel zum Umkehren der Richtung des expandierten Lichts von der einen Richtung zu der Gegenrichtung, wenn der Durchmesser des expandierten Lichts bis zu dem maximalen Durchmesser expandiert wurde, umfasst;
- Komprimieren der sekundären Rückseitenfläche des sekundären Prismas (107) relativ zu der primären Rückseitenfläche des primären Prismas (106), wobei zwischen diesen eine transparente Schnittstelle ausgebildet wird;
- Übermitteln des verarbeiteten Lichtstrahls durch die transparente Schnittstelle von dem primären Prisma (106) in das sekundäre Prisma (107), wobei der verarbeitete Lichtstrahl mehrmals in mehrere verarbeitete Lichtstrahlen aufgeteilt wird, welche eine höhere Leistungsabgabe als der Lichtstrahl aufweisen;
- Entkomprimieren der sekundären Rückseitenfläche des sekundären Prismas (107) relativ zu der primären Rückseitenfläche des primären Prismas (106) nach einem Übermitteln der mehreren verarbeiteten Lichtstrahlen in die Einschlusskammer (102), wodurch eine Übermittlung der mehreren verarbeiteten Lichtstrahlen von der Einschlusskammer (102) minimiert wird;
- wiederholtes Leiten der mehreren verarbeiteten Lichtstrahlen in der Einschlusskammer (102) entlang eines vorbestimmten reflektiven Lichtpfades, welcher sich von der sekundären Rückseitenfläche in einem ersten vorbestimmten Winkel, durch die mehreren lateralen Flächen in einem zu den reflektiven Flächen (112) im Wesentlichen senkrechten Winkel, und wiederholt zurück zu der sekundären Rückseitenfläche in einem zweiten vorbestimmten Winkel, welcher bewirkt, dass die mehreren verarbeiteten Lichtstrahlen von der sekundären Rückseitenfläche in dem ersten vorbestimmten Winkel reflektiert werden, erstreckt;

wobei die mehreren verarbeiteten Lichtstrahlen dadurch wiederholt einen linearen Impuls auf die reflektiven Flächen (112), welche mit einem Energiesystem in Verbindung stehen, übertragen.

**2.** Das Verfahren nach Anspruch 1, weiter umfassend:

- Sammeln und Konzentrieren von Licht unter Verwenden von einem oder mehreren Sammelspiegeln (540, 541), um konzentriertes Licht zu produzieren;
- Übermitteln des konzentrierten Lichts zu dem primären Prisma (106);
- Lenken des konzentrierten Lichts in das Licht-Expansions/Kontrahier-Gerät (762), welches mit dem primären Prisma (106) in Verbindung steht, wobei ein verarbeiteter, konzentrierter Lichtstrahl erzeugt wird;
- Übermitteln des verarbeiteten, konzentrierten Lichtstrahls durch die transparente Schnittstelle von dem primären Prisma (106) in das sekundäre Prisma (107), wobei der verarbeitete, konzentrierte Lichtstrahl mehrmals in mehrere verarbeitete, konzentrierte Lichtstrahlen aufgeteilt wird, welche eine höhere Leistungsabgabe als das konzentrierte Licht aufweisen;
- Übermitteln der mehreren verarbeiteten, konzentrierten Lichtstrahlen in die Einschlusskammer (102), wodurch eine Übermittlung der mehreren verarbeiteten, konzentrierten Lichtstrahlen von der Einschlusskammer (102) minimiert wird;

- wiederholtes Leiten der mehreren verarbeiteten, konzentrierten Lichtstrahlen in der Einschlusskammer (102) entlang des vorbestimmten reflektiven Lichtpfades, wobei die mehreren verarbeiteten, konzentrierten Lichtstrahlen dadurch wiederholt lineare Impulse auf die reflektiven Flächen (112), welche mit einem Energiesystem in Verbindung stehen, übertragen.

3. Das Verfahren nach Anspruch 1, weiter umfassend:

- Lenken eines zusätzlichen Lichtstrahls in das Licht-Expansions/Kontrahier-Gerät (762), wodurch der zusätzliche Lichtstrahl expandiert, reflektiert, kontrahiert, und auf sich selbst umgelenkt wird, wobei ein zusätzlicher verarbeiteter Lichtstrahl erzeugt wird;

- Komprimieren der sekundären Rückseitenfläche des sekundären Prismas (107) relativ zu der primären Rückseitenfläche des primären Prismas (106), wobei zwischen diesen eine transparente Schnittstelle ausgebildet wird;

- Übermitteln des zusätzlichen verarbeiteten Lichtstrahls durch die transparente Schnittstelle von dem primären Prisma (106) in das sekundäre Prisma (107), wobei der zusätzliche verarbeitete Lichtstrahl mehrmals in mehrere zusätzliche verarbeitete Lichtstrahlen aufgeteilt wird, welche eine höhere Leistungsabgabe als der zusätzliche Lichtstrahl aufweisen;

- Entkomprimieren der sekundären Rückseitenfläche des sekundären Prismas (107) relativ zu der primären Rückseitenfläche des primären Prismas (106) nach einem Übermitteln der mehreren zusätzlichen verarbeiteten Lichtstrahlen in die Einschlusskammer (102), wodurch eine Übermittlung der mehreren zusätzlichen verarbeiteten Lichtstrahlen von der Einschlusskammer (102) minimiert wird;

- wiederholtes Leiten der mehreren zusätzlichen verarbeiteten Lichtstrahlen entlang des vorbestimmten Lichtpfades, wodurch wiederholt zusätzlicher linearer Impuls auf die reflektiven Flächen (112), welche mit dem Energiesystem in Verbindung stehen, übertragen wird.

4. Das Verfahren nach Anspruch 2, weiter umfassend:

- Lenken von zusätzlichem konzentriertem Licht in das Licht-Expansions/Kontrahier-Gerät (762), wodurch das zusätzliche konzentrierte Licht expandiert, reflektiert, kontrahiert, und auf sich selbst umgelenkt wird, wobei ein zusätzlicher verarbeiteter, konzentrierter Lichtstrahl erzeugt wird;

- Komprimieren der sekundären Rückseitenfläche des sekundären Prismas (107) relativ zu der primären Rückseitenfläche des primären Prismas (106), wobei zwischen diesen eine transparente Schnittstelle ausgebildet wird;

- Übermitteln des zusätzlichen verarbeiteten, konzentrierten Lichtstrahls durch die transparente Schnittstelle von dem primären Prisma (106) in das sekundäre Prisma (107), wobei der zusätzliche verarbeitete, konzentrierte Lichtstrahl mehrmals in mehrere zusätzliche verarbeitete, konzentrierte Lichtstrahlen aufgeteilt wird, welche eine höhere Leistungsabgabe als der zusätzliche Lichtstrahl aufweisen;

- Entkomprimieren der sekundären Rückseitenfläche des sekundären Prismas (107) relativ zu der primären Rückseitenfläche des primären Prismas (106) nach einem Übermitteln der mehreren zusätzlichen verarbeiteten, konzentrierten Lichtstrahlen in die Einschlusskammer (102), wodurch eine Übermittlung der mehreren zusätzlichen verarbeiteten, konzentrierten Lichtstrahlen von der Einschlusskammer (102) minimiert wird;

- wiederholtes Leiten der mehreren zusätzlichen verarbeiteten, konzentrierten Lichtstrahlen entlang des vorbestimmten Lichtpfades, wodurch wiederholt zusätzlicher linearer Impuls auf die reflektiven Flächen (112), welche mit dem Energiesystem in Verbindung stehen, übertragen wird.

5. Das Verfahren nach einem der Ansprüche 1 4, wobei das Energiesystem mechanische Arbeit erzeugt.

6. Das Verfahren nach einem der Ansprüche 1 bis 5, wobei das Energiesystem eine Kurbelwellen-Anordnung (611) ist und der lineare Impuls, welcher auf die mehreren reflektiven Flächen übertragen wird, bewirkt, dass die Kurbelwellen-Anordnung (611) sich hin- und herbewegt.

7. Das Verfahren nach einem der Ansprüche 1 bis 4, wobei das Energiesystem ein Federgerät ist.

8. Das Verfahren nach einem der Ansprüche 1 bis 7, weiter umfassend ein Durchführen des Verfahrens im Wesentlichen simultan in mehreren Zylindern (608), welche mehrere Einschlusskammern umfassen.

**9.** Ein Photonenantrieb, welcher einen oder mehrere Zylinder enthält, welche folgende Elemente umfassen:

- ein primäres Prisma (106), welches poliertes kristallines Quarz mit einem ersten Brechungsindex umfasst, wobei das primäre Prisma (106) einen Lichtstrahl-Einlässe und eine primäre Rückseitenfläche umfasst;
- ein Licht-Expansions/Kontrahier-Gerät (762), welches mit dem Lichtstrahl-Einlass in Verbindung steht, wobei das Licht-Expansions/Kontrahier-Gerät derart ausgebildet ist, dass es einen Lichtstrahl expandiert, reflektiert und kontrahiert und den Lichtstrahl auf sich selbst umlenkt, wodurch es einen verarbeiteten Lichtstrahl erzeugt;
- ein sekundäres Prisma (107), welches poliertes kristallines Quarz mit einem zweiten Brechungsindex, welcher im Wesentlichen gleich dem ersten Brechungsindex ist, aufweist, wobei das sekundäre Prisma mehrere laterale Flächen umfasst und eine sekundäre Rückseitenfläche, welche angrenzend an die primäre Rückseitenfläche und beabstandet von der primären Rückseitenfläche angeordnet ist, aufweist, wobei zwischen diesen eine nicht-transparente Schnittstelle ausgebildet ist;
- ein piezo-elektrischer Aktuator (616), welcher mit dem primären Prisma (106) und/oder dem sekundären Prisma (107) operativ gekoppelt und derart ausgebildet ist, dass er die sekundäre Rückseitenfläche relativ zu der primären Rückseitenfläche dergestalt komprimiert, dass eine transparente Schnittstelle zwischen diesen ausgebildet wird, welche derart ausgebildet ist, dass sie den verarbeiteten Lichtstrahl von dem primären Prisma (106) zu dem sekundären Prisma (107) überträgt und den verarbeiteten Lichtstrahl mehrmals aufteilt, wobei mehrere verarbeitete Lichtstrahlen, welche eine höhere Leistungsabgabe als der Lichtstrahl enthalten, erzeugt werden; und
- eine Einschlusskammer (102), welche das sekundäre Prisma (107) und reflektive Flächen (112) umfassen, wobei die Einschlusskammer (102) derart ausgebildet ist, dass sie ein Leiten der mehreren verarbeiteten Lichtstrahlen entlang eines vorbestimmten reflektiven Lichtpfades, welcher sich von der sekundären Rückseitenfläche in einem ersten vorbestimmten Winkel, durch die mehreren lateralen Flächen in einem zu den reflektiven Flächen (112) im Wesentlichen senkrechten Winkel, und wiederholt zurück zu der sekundären Rückseitenfläche in einem zweiten vorbestimmten Winkel, welcher derart ausgestaltet ist, dass die mehreren verarbeiteten Lichtstrahlen von der sekundären Rückseitenfläche in dem ersten vorbestimmten Winkel reflektiert werden, erstreckt, enthält;

wobei die reflektiven Flächen (112) mit einem Energiesystem in Verbindung stehen.

**10.** Der Photonenantrieb nach Anspruch 9, wobei:

- das primäre Prisma (106) mit einem oder mehreren der Sammelspiegel (540, 541) in Verbindung steht, welche jeweils eine reflektive Oberfläche, welche derart ausgebildet ist, dass sie Licht sammelt und konzentriert und konzentriertes Licht zu dem primären Prisma (106) in Verbindung steht, umfassen;
- die transparente Schnittstelle derart ausgebildet ist, dass sie das konzentrierte Licht von dem primären Prisma (106) zu dem sekundären Prisma (107) überträgt und das konzentrierte Licht mehrmals aufteilt, wodurch mehrere verarbeitete, konzentrierte Lichtstrahlen, welche eine höhere Leistungsabgabe als das konzentrierte Licht enthalten, erzeugt werden; und,
- die Einschlusskammer (102) derart ausgebildet ist, dass sie ein Leiten der mehreren verarbeiteten, konzentrierten Lichtstrahlen entlang des vorbestimmten reflektiven Lichtpfades enthält.

**11.** Der Photonenantrieb nach Anspruch 9 oder 10, wobei das Energiesystem eine Kolben- und Kurbelwellen-Anordnung (611) ist.

**12.** Der Photonenantrieb nach einem der Ansprüche 9 bis 11, wobei das Energiesystem ein Federgerät ist.

**13.** Der Photonenantrieb nach einem der Ansprüche 9 bis 12, wobei der erste Brechungsindex größer als 1,45 ist und der zweite Brechungsindex größer als 1,45 ist.

**14.** Der Photonenantrieb nach einem der Ansprüche 9 bis 13, umfassend mehrere Zylinder (608).

**Revendications**

**1.** Procédé de mise en oeuvre d'un moteur photonique (100) pour produire un moment linéaire, le procédé comprenant les étapes suivantes :

positionner une face arrière d'un prisme primaire (106) comprenant un premier milieu optique transparent ayant un premier indice de réfraction adjacente et distante d'une face arrière secondaire d'un prisme secondaire (107) comprenant un deuxième milieu optique transparent ayant un deuxième indice de réfraction, le prisme secondaire (107) comprenant plusieurs faces latérales ;

fournir une chambre de confinement (102) comprenant le prisme secondaire (107) et des surfaces réfléchissantes (112) ;

produire un faisceau de lumière traitée en dirigeant un faisceau lumineux dans un dispositif d'expansion/contraction de lumière (762) qui communique avec le prisme primaire (106), le dispositif d'expansion/contraction de lumière (762) comprenant des facettes pour réfléchir la lumière de 90 degrés deux fois pour agrandir le diamètre de la lumière qui tourne dans le prisme primaire dans une direction et réfléchir la lumière de 90 degrés deux fois pour contracter le diamètre de la lumière qui tourne dans le prisme primaire dans la direction opposée à la première direction et un miroir pour inverser la direction de la lumière expansée quand le diamètre de la lumière expansée est expansé jusqu'au diamètre maximum de la première direction à la direction opposée ;

comprimer la face arrière secondaire du prisme secondaire (107) par rapport à la face arrière primaire du prisme primaire (106), en formant une interface transparente entre elles ;

communiquer le faisceau de lumière traitée à travers l'interface transparente du prisme primaire (106) au prisme secondaire (107), en divisant le faisceau de lumière traitée plusieurs fois pour donner plusieurs faisceaux de lumière traitée comprenant une puissance de sortie supérieure à celle du faisceau lumineux ;

décompresser la face arrière secondaire du prisme secondaire (107) par rapport à la face arrière primaire du prisme primaire (106) après avoir communiqué les différents faisceaux de lumière traitée dans la chambre de confinement (102), ce qui minimise la communication des différents faisceaux de lumière traitée depuis la chambre de confinement (102) ;

propager de façon répétée les différents faisceaux de lumière traitée dans la chambre de confinement (102) le long d'un chemin de lumière réfléchissant prédéterminé qui s'étend depuis la face arrière secondaire avec un premier angle prédéterminé, à travers les différentes faces latérales avec un angle globalement normal aux surfaces réfléchissantes (112), et de façon répétée en retour vers la face arrière secondaire avec un deuxième angle prédéterminé effectif pour réfléchir les différents faisceaux de lumière traitée depuis la face arrière secondaire avec le premier angle prédéterminé ;

les différents faisceaux de lumière traitée imprimant de ce fait de façon répétée un moment linéaire aux surfaces réfléchissantes (112) communiquant avec un système d'énergie.

2. Procédé selon la revendication 1, comprenant en outre les étapes suivantes :

collecter et concentrer la lumière en utilisant un ou plusieurs miroirs collectifs (540, 541) pour produire de la lumière concentrée ;

communiquer la lumière concentrée au prisme primaire (106) ;

diriger la lumière concentrée dans le dispositif d'expansion/contraction de lumière (762) communiquant avec le prisme primaire (106), ce qui produit un faisceau de lumière traitée et concentrée ;

communiquer le faisceau de lumière traitée et concentrée à travers l'interface transparente, du prisme primaire (106) au prisme secondaire (107), en divisant le faisceau de lumière traitée et concentrée en plusieurs faisceaux de lumière traitée et concentrée comprenant une puissance de sortie supérieure à celle du faisceau concentré ;

communiquer les différents faisceaux de lumière traitée et concentrée dans la chambre de confinement (102), en minimisant de ce fait la communication des différents faisceaux de lumière traitée et concentrée depuis la chambre de confinement (102) ;

propager de façon répétée les faisceaux de lumière traitée et concentrée dans la chambre de confinement (102) le long du chemin de lumière réfléchissant prédéterminé, les différents faisceaux de lumière traitée et concentrée imprimant de ce fait de façon répétée un moment linéaire aux surfaces réfléchissantes (112) communiquant avec un système d'énergie.

3. Procédé selon la revendication 1, comprenant en outre les étapes suivantes :

diriger un faisceau de lumière additionnel dans le dispositif d'expansion/contraction de lumière (762), en expansant, réfléchissant, contractant et redirigeant de ce fait le faisceau de lumière additionnel sur lui-même, ce qui produit un faisceau de lumière traitée additionnel ;

comprimer la face arrière secondaire du prisme secondaire (107) par rapport à la face arrière primaire du prisme primaire (10), en formant l'interface transparente entre elles ;

communiquer le faisceau de lumière traitée additionnel à travers l'interface transparente, du prisme primaire (106) au prisme secondaire (107), en divisant le faisceau de lumière traitée additionnel plusieurs fois en plusieurs faisceaux de lumière traitée additionnels comprenant une puissance de sortie supérieure à celle du faisceau de lumière additionnel ;

décompresser la face arrière secondaire du prisme secondaire (107) par rapport à la face arrière primaire du prisme primaire (106) après avoir communiqué les différents faisceaux de lumière traitée additionnels dans la chambre de confinement (102), ce qui minimise la communication des différents faisceaux de lumière traitée additionnels depuis la chambre de confinement (102) ;

propager de façon répétée les différents faisceaux de lumière traitée additionnels le long du chemin de lumière prédéterminé, imprimant de ce fait de façon répétée un moment linéaire additionnel aux surfaces réfléchissantes (112) communiquant avec un système d'énergie.

4. Procédé selon la revendication 2, comprenant en outre les étapes suivantes :

diriger de la lumière concentrée additionnelle dans le dispositif d'expansion/contraction de lumière (762), en expansant, réfléchissant, contractant et redirigeant de ce fait la lumière concentrée additionnelle sur elle-même, ce qui produit un faisceau de lumière traitée et concentrée additionnel ;

comprimer la face arrière secondaire du prisme secondaire (107) par rapport à la face arrière primaire du prisme primaire (106), en formant l'interface transparente entre elles ;

communiquer le faisceau de lumière traitée et concentrée additionnel à travers l'interface transparente du prisme primaire (106) au prisme secondaire (107), en divisant le faisceau de lumière traitée et concentrée additionnel plusieurs fois pour donner plusieurs faisceaux de lumière traitée et concentrée additionnels comprenant une puissance de sortie supérieure à celle du faisceau lumineux additionnel ;

décompresser la face arrière secondaire du prisme secondaire (107) par rapport à la face arrière primaire du prisme primaire (106) après avoir communiqué les différents faisceaux de lumière traitée et concentrée additionnels dans la chambre de confinement (102), ce qui minimise la communication des différents faisceaux de lumière traitée et concentrée additionnels depuis la chambre de confinement (102) ;

propager de façon répétée les différents faisceaux de lumière traitée et concentrée additionnels le long du chemin de lumière prédéterminé, en imprimant de ce fait de façon répétée un moment linéaire additionnel aux surfaces réfléchissantes (112) communiquant avec le système d'énergie.

5. Procédé selon l'une quelconque des revendications 1 à 4, dans lequel le système d'énergie produit un travail mécanique.

6. Procédé selon l'une quelconque des revendications 1 à 5, dans lequel le système d'énergie est un ensemble de vilebrequin (611) et le moment linéaire imprimé aux différentes surfaces réfléchissantes provoque le mouvement alternatif de l'ensemble de vilebrequin (611).

7. Procédé selon l'une quelconque des revendications 1 à 4, dans lequel le système d'énergie est un dispositif à ressort.

8. Procédé selon l'une quelconque des revendications 1 à 7, comprenant en outre le fait de mettre en oeuvre le procédé de façon substantiellement simultanée dans plusieurs cylindres (608) comprenant plusieurs chambres de confinement.

9. Moteur photonique comprenant un ou plusieurs cylindres comprenant :

un prisme primaire (106) comprenant du quartz cristallin poli ayant un premier indice de réfraction, le prisme primaire (106) comprenant une entrée de faisceau lumineux et une face arrière primaire ;

un dispositif d'expansion/contraction de lumière (762) qui communique avec l'entrée de faisceau lumineux, le dispositif d'expansion/contraction de lumière étant adapté pour expanser, réfléchir et contracter un faisceau lumineux et pour rediriger le faisceau lumineux sur lui-même, ce qui produit un faisceau de lumière traitée ;

un prisme secondaire (107) comprenant du quartz cristallin poli ayant un deuxième indice de réfraction qui est substantiellement le même que le premier indice de réfraction, le prisme secondaire comprenant plusieurs faces latérales et ayant une face arrière secondaire positionnée de façon adjacente et distante de la face arrière primaire, en formant une interface non transparente entre elles ;

un actionneur piézoélectrique (616) couplé fonctionnellement au prisme primaire (106) et/ou au prisme secondaire (107) et adapté pour comprimer la face arrière secondaire par rapport à la face arrière primaire pour former une interface transparente entre elles adaptée pour transmettre le faisceau de lumière traitée du prisme primaire (106) au prisme secondaire (107) et pour diviser le faisceau de lumière traitée plusieurs fois, en produisant plusieurs faisceaux de lumière traitée comprenant une puissance de sortie supérieure à celle du faisceau lumineux ; et

une chambre de confinement (102) comprenant le prisme secondaire (107) et des surfaces réfléchissantes (112), la chambre de confinement (102) étant adaptée pour contenir la propagation des différents faisceaux de lumière traitée le long d'un chemin de lumière réfléchissant prédéterminé qui s'étend depuis la face arrière secondaire avec un premier angle prédéterminé, à travers les différentes faces latérales avec un angle globalement normal aux surfaces réfléchissantes (112), et de façon répétée en retour vers la face arrière secondaire avec un deuxième angle prédéterminé adapté pour réfléchir les différents faisceaux de lumière traitée depuis la face arrière secondaire avec le premier angle prédéterminé ;

dans lequel les surfaces réfléchissantes (112) communiquent avec un système d'énergie.

10. Moteur photonique selon la revendication 9, dans lequel :

le prisme primaire (106) communique avec un ou plusieurs miroirs collectifs (540, 541) comprenant chacun une surface réfléchissante adaptée pour collecter et concentrer la lumière et pour communiquer la lumière concentrée au prisme primaire (106) ;

l'interface transparente est adaptée pour transmettre la lumière concentrée du prisme primaire (106) au prisme secondaire (107) et pour diviser la lumière concentrée plusieurs fois, en produisant plusieurs faisceaux de lumière traitée et concentrée comprenant une puissance de sortie supérieure à celle de la lumière concentré ; et

la chambre de confinement (102) est adaptée pour contenir la propagation des différents faisceaux de lumière traitée et concentrée le long du chemin de lumière réfléchissant prédéterminé.

11. Moteur photonique selon la revendication 9 ou 10, dans lequel le système d'énergie est un piston et un ensemble de vilebrequin (611).

12. Moteur photonique selon l'une quelconque des revendications 9 à 11, dans lequel le système d'énergie est un dispositif à ressort.

13. Moteur photonique selon l'une quelconque des revendications 9 à 12, dans lequel le premier indice de réfraction est supérieur à 1,45 et le deuxième indice de réfraction est supérieur à 1,45.

14. Moteur photonique selon l'une quelconque des revendications 9 à 13, comprenant plusieurs cylindres (608).

FIG. 1

FIG. 2

FIG. 5

FIG. 3

FIG. 1A

FIG. 1B

406

A        B

y-axis    45°

C

+x-pol

## FIG. 4A

406

A        B

y-axis    45°

C

+x-pol

## FIG. 4B

FIG. 6A

FIG. 6B

700

706

762

760

706a

706c

714

707c

707

FIG. 7A

706

762

760

AA

704d

AA

706c

FIG. 7E

706

762

760

AA

706c

FIG. 7F

FIG. 7B

FIG. 7D

FIG. 7C

FIG. 7G

FIG. 7H

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3649105 A